# EUROPÄISCHE PATENTSCHRIFT

(11) **EP 2 087 322 B1**
(45) Veröffentlichungstag und Bekanntmachung des Hinweises auf die Patenterteilung: **29.08.2012**
(21) Anmeldenummer: 07802332.2
(22) Anmeldetag: 15.09.2007
(51) Int. Cl.: G01F 1/075

(54) **VOLUMENZÄHLER FÜR STRÖMENDE MEDIEN MIT SELEKTIVER KOPPLUNG ZWISCHEN ZÄHLERANORDNUNG UND RECHENWERK**
VOLUME METER FOR FLOWING MEDIA WITH SELECTIVE COUPLING BETWEEN COUNTER SYSTEM AND CALCULATING UNIT
VOLUMETRE POUR SUBSTANCES EN ECOULEMENT EQUIPE D'UN DISPOSITIF COMPTEUR ET D'UNE UNITE ARITHMETIQUE COUPLES SELECTIVEMENT

(30) Priorität: 29.09.2006 DE 102006046864
(43) Veröffentlichungstag der Anmeldung: 12.08.2009
(73) Patentinhaber: Elster Messtechnik GmbH, 68623 Lampertheim (DE)
(72) Erfinder: KISSEL, Rudi, 68647 Biblis (DE); BOTH, Ralf, D-97239 Aub (DE); AMEIS, Rüdiger, 69221 Dossenheim (DE)
(74) Vertreter: Miller, Toivo
(86) Internationale Anmeldenummer: PCT/EP2007/008050
(87) Internationale Veröffentlichungsnummer: WO 2008/040442

(56) Entgegenhaltungen:
- GB-A- 2 388 193
- US-B1- 6 474 132

## Beschreibung

Die Erfindung betrifft einen Volumenzähler für strömende Medien, insbesondere Flüssigkeiten wie Wasser, sowie ein entsprechendes Verfahren zur Volumenzählung, wobei eine ungewollte das Ergebnis verfälschende Zählung von beispielsweise Gaseinschlüssen wie Luft in einem Leitungsnetz unterdrückt werden kann.

Bekannte Volumenzähler für Flüssigkeiten, insbesondere als Trockenläufer ausgebildete Mehrstrahl-Flügelradzähler, umfassen üblicherweise ein Rechenwerk, einen oder mehrere Impulssensoren sowie einen Messeinsatz, in dem ein Flügelrad mit Flügelradwelle drehbar in zwei Lagern gehaltert ist. Darüber hinaus ist wenigstens ein Impulsgeber vorgesehen, der mit der Flügelradwelle verbunden ist, mit dieser mitrotiert und mit dem wenigstens einen Impulssensor derart zusammenwirkt, dass er bei durchqueren des Sensorbereichs im Sensor ein Impulssignal hervorruft. Als Impulssignal wird dabei jedes Signal mit endlicher Dauer und vorbestimmter Höhe beziehungsweise vorbestimmtem Verlauf erachtet, wie beispielsweise Rechteckpulse. Nachteilig kommt es bei Instandhaltungs- und/oder Wartungsarbeiten und einem Öffnen und/oder Unterbrechen und/oder Belüften eines Leistungsnetzes immer wieder zu Lufteinschlüssen in Leitungen. Werden herkömmliche Volumenzähler von derartigen Lufteinschlüssen durchströmt, so werden diese fälschlicherweise als Flüssigkeitsstrom gezählt obgleich keinerlei Flüssigkeit durch den Zähler geflossen is-Herkömmliche Zähler differenzieren nicht zwischen unterschiedlichen Medien, sondern zählen unabhängig jede Strömung. Dadurch kann die eigentlich angestrebte Volumenzählung der Flüssigkeit und damit beispielsweise eine Ermittlung des Verbrauchs erheblich verfälscht sein.

So ist aus der US 6 474 132 B1 ein Volumenzähler bekannt, welcher mit einer Anordnung zur Detektion und/oder Kompensation von Lufteinschlüssen, welche durch das jeweilige Leitungsnetz strömen, zusammenwirkt und welche zwei in einem separaten Leitungsstück oder in dem Zu- oder Ablauf des Wasserzählers gegenüberliegend angeordnete Sonden zur Detektion der elektrischen Eigenschaften der jeweiligen Flüssigkeiten umfasst.

Auch aus der GB 2 388 193 A ist ein Einstrahl-Durchflussmesser bekannt geworden, welcher sowohl im Zufluss sowie im Ablauf jeweils eine ringartige Elektrode zur Bestimmung des sich zwischen den Elektroden einstellenden Widerstands- oder lmpedanzwertes aufweist.

Aufgabe der Erfindung ist es eine effizientere und genauere Möglichkeit zur Volumenbestimmung einer strömenden Flüssigkeit anzugeben.

Diese Aufgabe wird durch einen Mehrstrahl-Volumenzähler für strömende Medien, insbesondere für Flüssigkeiten, mit den Merkmalen des Anspruchs 1 gelöst. Vorteilhafte Ausgestaltungen und Weiterbildungen der Erfindung sowie ein entsprechendes Verfahren sind in weiteren Ansprüchen und der nachfolgenden Beschreibung angegeben.

Der erfindungsgemäße Mehrstrahl-Volumenzähler umfasst ein Rechenwerk, eine Volumenmesseinrichtung mit einem von einem Medium durchströmbaren Messraum mit wenigstens einem Zufluss sowie wenigstens einem Ablauf, sowie mit einer Zähleranordnung, wobei eine Sensoranordnung vorgesehen ist, die wenigstens eine vorbestimmbare spezifische Kenngröße des jeweils durchströmenden Mediums überwacht und/oder erfasst und wobei kenngrößenabhängig eine selektive Kopplung oder Entkopplung zwischen Zähleranordnung und Rechenwerk bewirkt ist.

In vorteilhafter Ausgestaltung ist eine Kopplung zwischen Zähleranordnung und Rechenwerk dann bewirkt, wenn die mittels Sensoranordnung erfasste Kenngröße einer Flüssigkeit, insbesondere Wasser, entspricht und/oder dieser zuzuordnen ist.

Entsprechend ist weiterer Ausgestaltung eine Entkopplung zwischen Zähleranordnung und Rechenwerk dann bewirkt, wenn die mittels Sensoranordnung erfasste Kenngröße einem Gas, insbesondere Luft, entspricht oder diesem zuzuordnen ist.

In einer weiteren Ausgestaltung weist die Sensoranordnung auf, um die elektrische Leitfähigkeit, den elektrischen Widerstand, die Kapazität, die Induktivität, die magnetische Suszeptibilität, die optische Dichte oder den Brechungsindex oder eine andere physikalische Größe des den Messraum durchströmenden Mediums oder eine Kombination daraus zu erfassen und/oder zu bestimmen.

Weiterhin sind Mittel vorsehbar, welche in Abhängigkeit des von der Sensoranordnung ermittelten Kenngrößenwertes selektiv eine Kopplung oder Entkopplung von Zähleranordnung und Rechenwerk bewirken und/oder die Kopplung und/oder Entkopplung anhand wenigstens eines vorbestimmbaren Kenngrößen-Schwellenwertes bewirken.

In vorteilhafter Ausgestaltung erfolgt die Kopplung und/oder Entkopplung von Rechenwerk und Zähleranordnung elektronisch gesteuert, wobei weiterhin vorsehbar ist, dass die Kopplung und/oder Entkopplung zwischen Rechenwerk und Zähleranordnung elektrisch, elektromagnetisch, induktiv, kapazitiv, optisch oder mechanisch oder einer Kombination daraus bewirkt ist

In weiterführender Ausgestaltung umfasst die Zähleranordnung einen im Messraum drehbeweglich gelagerten Messkörper, der von dem durch den Messraum strömenden Medium in Drehbewegung versetzt ist.

Insbesondere handelt es sich um einen Flügelradzähler, wobei der Messkörper der Zähleranordnung ein Flügelrad mit Flügelradwelle umfasst, oder um einen Ringkolbenzähler, wobei der Messkörper der Zähleranordnung einen exzentrisch gelagerten Kolben mit Drehwelle umfasst.

In vorteilhafter Ausgestaltung weist die Zähleranordnung wenigstens einen Impulsgeber und wenigstens einen Impulssensor auf, wobei der wenigstens eine Impulsgeber mit dem Messkörper der Zähleranordnung in Wirkverbindung steht und mit dem wenigstens einen Impulssensor derart zusammenwirkt, dass Drehbewegungen des Messkörpers in Form volumenproportionaler Impulse vom Impulssensor erfassbar sind.

In vorteilhafter Weiterbildung ist der Impulssensor der Zähleranordnung mit dem Rechenwerk derart koppelbar, dass Drehbewegungen des Messkörpers vom Rechenwerk erfassbar und/oder in ein Volumen umrechenbar sind, wobei die Umrechnung vorteilhaft elektronisch erfolgen kann.

In alternativer Ausgestaltung ist der Messkörper der Zähleranordnung, insbesondere dessen Welle, vermittels eines Getriebes mit wenigstens einem Zahnrad sowie wenigstens einer Welle mit dem Rechenwerk derart koppelbar, dass Drehbewegungen des Messkörpers vom Rechenwerk erfassbar und/oder in ein Volumen umrechenbar sind, wobei die Umrechnung vermittels einer entsprechenden Übersetzung oder Untersetzung des Getriebes durchführbar ist.

In vorteilhafter Weiterbildung umfasst das Getriebe eine Kupplung über welche eine insbesondere eine mechanische Kopplung und/oder Entkopplung zwischen Rechenwerk und Zähleranordnung bewirkt wird.

In einer weiteren Ausgestaltung weist die Sensoranordnung wenigstens zwei elektrisch leitfähige Kontakte auf, welche in den vom Medium durchströmten Bereichen des Volumenzählers im Messraum voneinander beabstandet angeordnet sind und/oder zwischen jeweils zwei Kontakten eine Spannungsdifferenz beaufschlagbar ist.

Weiterhin sind Mittel vorsehbar, um die elektrische Leitfähigkeit und/oder den elektrischen Widerstand des zwischen den wenigstens zwei Kontakten strömenden Mediums zu überwachen und/oder zu bestimmen.

Auch sind Mittel vorsehbar, die bei Überschreiten eines vorbestimmbaren elektrischen Leitfähigkeitswertes das Rechenwerk an die Zähleranordnung koppeln und/oder bei Unterschreiten eines vorbestimmbaren elektrischen Leitfähigkeitswertes Rechenwerk und Zähleranordnung entkoppeln.

In vorteilhafter Weiterbildung sind Impulsgeber und Impulssensor der Impulszähleranordnung derart aufeinander abgestimmt und/oder wirken derart zusammen, dass der Impulsgeber im Impulssensor ein Impulssignal hervorruft, dessen Impulsdauer derjenigen Zeitspanne entspricht, die das jeweilige Geberelement des Impulsgebers im Sensorbereich verbringt. Bei dem Impulssensor kann es sich dabei beispielsweise um einen induktiven, kapazitiven oder auch optischen Sensor handeln, wobei Geberelement und Impulsgeber entsprechend auf den Sensor abzustimmen sind.

Der optische Sensor könnte beispielsweise aus einer LED und einer Lichtempfindlichen Photozelle gebildet sein, wobei LED und Photozelle derart angeordnet sind, dass bei Auftreten eines Impulssignals, der emittierte Lichtstrahl der LED auf den entsprechenden Impulsgeber trifft und von dessen Geberelement, beispielsweise einer hochrefektierenden Goldschicht, auf die Photozelle reflektiert wird.

Vorteilhaft kann der wenigstens eine Impulssensor auch in das Rechenwerk integriert sein.

Weiterhin wird die gestellte Aufgabe auch durch ein Verfahren zur Volumenzählung bei strömenden Medien, insbesondere von Flüssigkeiten, wie beispielsweise Wasser, mittels eines gemäß vorstehenden Ausführungen ausgebildeten Volumenzählers gelöst, wobei wenigstens eine vorbestimmbare spezifische Kenngröße des jeweils durchströmenden Mediums überwacht und/oder erfasst wird und kenngrößenabhängig eine selektive Kopplung und/oder Entkopplung zwischen Zähleranordnung und Rechenwerk bewirkt wird.

Dadurch ist es möglich die Volumenzählung auf nur ein bestimmtes Medium, insbesondere eine Flüssigkeit wie beispielsweise Wasser, selektiv zu begrenzen und damit die Effizienz und/oder Genauigkeit der Zählung zu erhöhen.

In vorteilhafter Weiterführung des Verfahrens wird eine Kopplung zwischen Zähleranordnung und Rechenwerk dann bewirkt, wenn die mittels Sensoranordnung erfasste Kenngröße einer Flüssigkeit, insbesondere Wasser, entspricht und/oder dieser zugeordnet wird und/oder eine Entkopplung zwischen Zähleranordnung und Rechenwerk dann bewirkt, wenn die erfasste Kenngröße einem Gas, insbesondere Luft, entspricht und/oder diesem zugeordnet wird.

Als spezifische Kenngröße werden dabei insbesondere die elektrische Leitfähigkeit, der elektrische Widerstand, die Kapazität, die Induktivität, die magnetische Suszeptibilität, die optische Dichte, der Brechungsindex, das Absorptionsvermögen oder eine andere physikalische Größe des strömenden Mediums oder eine Kombination daraus erfasst und/oder bestimmt.

Verfahrensgemäß kann die Kenngrößenerfassung dabei zyklisch oder kontinuierlich erfolgen beziehungsweise durchgeführt werden.

In vorteilhafter Ausbildung des Verfahrens wird eine Kopplung oder Entkopplung von Zähleranordnung und Rechenwerk dabei selektiv in Abhängigkeit des jeweilig ermittelten Kenngrößenwertes und/oder anhand wenigstens eines vorbestimmbaren Kenngrößen-Schwellenwertes bewirkt.

In vorteilhafter Ausprägung des Verfahrens wird die Kopplung und/oder Entkopplung elektronisch gesteuert durchgeführt.

Weiterführend wird die Kopplung und/oder Entkopplung von Zähleranordnung und Rechenwerk dabei elektrisch, elektromagnetisch, induktiv, kapazitiv, optisch oder mechanisch oder einer Kombination daraus bewirkt.

In vorteilhafter Weiterbildung des Verfahrens lassen sich anhand medienspezifischer Kenngrößen-Schwellenwerte mit nur einem Volumenzähler mit elektronischem Rechenwerk durchströmte Volumina verschiedener Medien, wie beispielsweise Gas, Wasser, aber auch unterschiedlicher Flüssigkeiten und/oder Chemikalien und/oder Öle separiert bestimmen.

Die weitere Darlegung der Erfindung sowie vorteilhafter Ausgestaltungen erfolgt anhand der nachfolgenden Figur und des zugehörigen Ausführungsbeispiels.

Es zeigt:

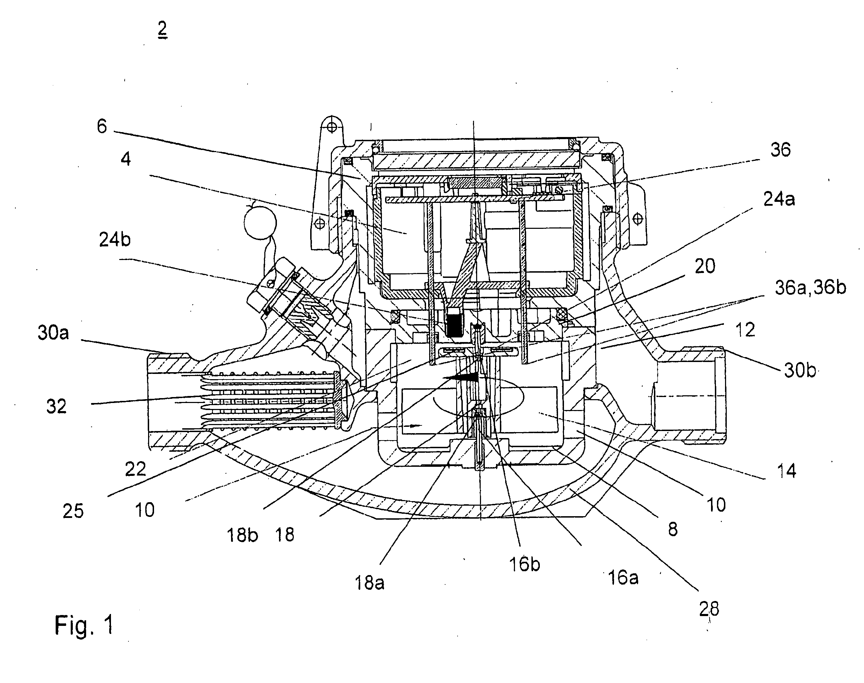

Fig. 1 erfindungsgemäß beispielhaft ausgestalteter Flügelradwasserzähler mit elektronischem Rechenwerk

In Fig. 1 ist ein erfindungsgemäß beispielhaft ausgestalteter Mehrstrahl-Flügelradwasserzähler 2 in Schnittdarstellung gezeigt. Dieser Volumenzähler 2 besitzt ein elektronisches Rechenwerk 4, welches in einem becherartig ausgebildeten Rechenwerkeinsatzgehäuse 6 angeordnet ist, sowie eine Volumenmesseinrichtung mit einer Zähleranordnung mit einem als Becher ausgebildeten Messeinsatzgehäuse 8 mit Zuflüssen 10 und einem Ablauf 12, in dem ein als Flügelrad 14 ausgebildeter Messkörper drehbar angeordnet ist. Das becherartig ausgestaltete Messeinsatzgehäuse 8 weist einen Becherboden auf, in dem in einem ersten Lager 16a ein erstes Ende 18 a einer das Flügelrad 14 tragenden Flügelradwelle 18 drehbar gelagert ist.. Des weiteren ist eine erste Lagerplatte 20 mit einem zweiten Lager 16b vorgesehen, in dem ein zweites Ende 18b der Flügelradwelle 18 drehbar gelagert ist und welche Lagerplatte 20 das Messeinsatzgehäuse 8 nach oben begrenzt und gemeinsam mit dem Messeinsatzgehäuse 8 den eigentlichen Messraum 22 einschließt.

Auf das Messeinsatzgehäuse 8 stützen sich die erste Lagerplatte 20 sowie das Rechenwerkeinsatzgehäuse 6 ab. Die Volumenmesseinrichtung weist weiterhin eine Zähleranordnung 24, insbesondere eine Impulszähleranordnung, mit wenigstens einem Impulsgeber 24a mit wenigstens einem Geberelement 25 und wenigstens einem Impulssensor 24b auf, wobei der wenigstens eine Impulsgeber 24a mit der Flügelradwelle 18 in Wirkverbindung steht, insbesondere fest beziehungsweise starr mit dieser und/oder dem Flügelrad 14 verbunden ist, und mit dem wenigstens einen Impulssensor 24b zusammenwirkt. Im hier gezeigten Beispiel ist der Impulsgeber 24a im Nahbereich der ersten Lagerplatte 20 fest mit dem Flügelrad 14 verbunden. Die Oberflächennormale des Impulsgebers 24a ist dabei parallel zur Flügelradwelle 18 ausgerichtet. Des Weiteren weist die erste Lagerplatte 20 einen Abdichtring 13 zur Abdichtung gegen das Rechenwerkeinsatzgehäuse 6. Weiterhin ist ein Volumenzählergehäuse 28 vorgesehen, welches die Volumenmesseinrichtung und zumindest anteilig auch das Rechenwerkeinsatzgehäuse 6 aufnimmt und auf welchem sich das Messeinsatzgehäuse 8 abstützt. Das Volumenzählergehäuse 28 weist jeweils eine zulauf- und ablaufseitige Anschlussmöglichkeit 30a, 30b an beziehungsweise in ein entsprechendes Leitungssystem auf, wobei auf der Zuleitungsseite in Partikelfilter 32 integriert ist. Weiterhin ist eine Kopfverschraubung mit Deckel vorgesehen, durch welche Rechenwerkeinsatzgehäuse 6 mit Einbauten, erste Lagerplatte 20, Messeinsatzgehäuse 8 mit Einbauten und Volumenzählergehäuse 28 gegeneinander fixiert und/oder gehaltert werden.

Impulsgeber 24a und Impulssensor 24b der Impulszähleranordnung 24 sind aufeinander abgestimmt und wirken derart zusammen, dass der Impulsgeber 24a im Impulssensor 24b ein Impulssignal hervorruft, dessen Impulsdauer derjenigen Zeitspanne entspricht, die ein Geberelement 25 im Sensorbereich verbringt. Ist das Geberelement 25 aus elektrisch leitendem und/oder reflektierendem beziehungsweise hochreflektierendem Material gebildet, so kann der zugehörige Impulssensor 24b entsprechend induktiver oder optischer Art beispielsweise als elektromagnetische Spule oder Lichtquelle/Photosensor-Kombination ausgebildet sein.

Im vorliegenden Beispiel rufen die Umdrehungen des Messelementes beziehungsweise Messkörpers 14 und damit des Impulsgebers 24a, welcher ein metallisches Geberelement 25 aufweist, bei Durchlaufen des Sensorbereichs eine messbare Veränderung einer induktiven Schwelle des als elektromagnetische Spule ausgebildeten Impulssensors 24b und damit einen volumenproportionalen Impuls hervor.

Weiterhin ist eine Sensoranordnung 36 vorgesehen, die wenigstens eine vorbestimmbare spezifische Kenngröße des jeweils durchströmenden Mediums überwacht und/oder erfasst und kenngrößenabhängig eine selektive Kopplung und/oder Entkopplung zwischen Zähleranordnung und Rechenwerk 4 bewirkt.

Eine Kopplung zwischen Zähleranordnung und Rechenwerk 4 wird insbesondere dann bewirkt, wenn die mittels Sensoranordnung 36 erfasste Kenngröße einer Flüssigkeit, insbesondere Wasser, entspricht oder innerhalb eines vorbestimmbaren Toleranzbereiches dieser zuordenbar ist.

Dies bedeutet, dass der vom Impulssensor 24b registrierte volumenproportionale Zählimpuls nur in denjenigen Fällen an das Rechenwerk 4 zur Erfassung und/oder Volumenumrechnung und/oder Anzeige weitergeleitet wird, wenn die Sensoranordnung 36 das strömende Medium als Flüssigkeit, insbesondere Wasser, identifiziert.

Ist das durch die Messeinrichtung strömende Medium nicht als Flüssigkeit, insbesondere Wasser identifiziert, so findet eine Entkopplung zwischen Zähleranordnung und Rechenwerk 4 statt, wobei die Weiterleitung der vom Sensor 24b erfassten Impulse an das Rechenwerk 4 unterbrochen und/oder die vom Sensor erfassten Impulse vom Rechenwerk 4 nicht erfasst und/oder nicht in ein Volumen umgerechnet und/oder nicht angezeigt werden.

Auf diese Weise ist beispielsweise eine verfälschende Zählung von durch den Volumenmesser strömender Luft oder anderen in einem Leitungsnetz befindlichen Gaseinschlüssen vermeidbar, da selektiv nur die Flüssigkeitsströmung beziehungsweise das durchströmte Flüssigkeitsvolumen gewertet wird.

Dies zu erreichen umfasst die Sensoranordnung 24 Mittel, um die elektrische Leitfähigkeit, den elektrischen Widerstand, die Kapazität, die Induktivität, die magnetische Suszeptibilität, die optische Dichte oder den Brechungsindex oder eine andere physikalische Größe des den Messraum durchströmenden Mediums oder eine Kombination daraus zu erfassen und/oder zu bestimmen und/oder selektiv in Abhängigkeit des von der Sensoranordnung 36 ermittelten Kenngrößenwertes eine Kopplung oder Entkopplung von Zähleranordnung und Rechenwerk 4 bewirken.

Die Selektion zwischen Kopplung oder Entkopplung ist dabei anhand wenigstens eines vorbestimmbaren Kenngrößen-Schwellenwertes bewirkt und erfolgt im vorliegenden Beispiel elektronisch gesteuert unter Verwendung entsprechender elektrischer und/oder elektronischer Bauelemente wie beispielsweise Mikrokontroller, PLC, SPS oder vergleichbarem, welche in das Rechenwerk 4 integrierbar sind.

Die elektrische Versorgung kann dabei über Netzanschluss, gegebenenfalls mit zwischengeschaltetem Transformator und/oder über eine entsprechend dimensionierte Batterie, welche insbesondere im Rechenwerk 4 und/oder im Rechenwerkeinsatzgehäuse 6 anordenbar und/oder integrierbar ist.

Die Übertragung der Sensorimpulse an das Rechenwerk 4 kann dabei kabelgebunden oder auch drahtlos erfolgen, wobei entsprechende Schnittstellen vorzusehen sind.

Vorliegend erfolgt die Selektion in Abhängigkeit des zwischen jeweils zwei Kontakten gemessenen elektrischen Widerstandswertes und/oder der elektrische Leitfähigkeit des den Messraum 22 durchströmenden Mediums, wobei die Sensoranordnung 36 wenigstens zwei elektrisch leitfähige Kontakte 36a, 36b aufweist, welche in den vom Medium durchströmten Bereichen des Volumenzählers 2 im Messraum 22 voneinander beabstandet angeordnet sind und/oder zwischen jeweils zwei Kontakten eine vorgebbare Spannungsdifferenz beaufschlagbar und der fließende Strom messbar ist.

Anhand des gemessenen Stroms wird dann die elektrische Leitfähigkeit und/oder der elektrischen Widerstand des jeweilig zwischen den wenigstens zwei Kontakten 36a, 36b strömenden Mediums bestimmt und/oder überwacht und/oder der spezifische Widerstandwert und/oder Leitfähigkeitswert ermittelt.

Handelt es sich um den Widerstandswert von Wasser, so wird eine Kopplung bewirkt und die Umdrehungen des Flügelrades 14 und damit das durchströmte Volumen vom Rechenwerk 4 gezählt.

Handelt es sich jedoch um den Widerstandwert von Luft, so wird eine Entkopplung bewirkt und damit die Umdrehungen des Flügelrades 14 und damit das durchströmte Volumen vom Rechenwerk 4 nicht gezählt.

Die Erfindung ist nicht auf die explizit genannten Volumenzähler wie Flügelrad oder Ringkolbenzähler beschränkt, sondern vielmehr auf jedwede Arten von Volumenzählern, beispielsweise auch Coriolis-Messer, magnetisch-induktiv arbeitende Zähler oder nach dem Prinzip der Flüssigkeitsoszillation arbeitende Zähler anwendbar.

## Patentansprüche

1. Mehrstrahl-Volumenzähler (2) für strömende Medien, insbesondere für Flüssigkeiten, mit einem Rechenwerk (4), mit einer Volumenmesseinrichtung mit einem von einem Medium durchströmbaren Messraum (22) mit Zuflüssen (10) sowie wenigstens einem Ablauf (12), sowie einer Zähleranordnung, **dadurch gekennzeichnet, dass** im Messraum (22) eine Sensoranordnung (36) vorgesehen ist, die wenigstens eine vorbestimmbare spezifische Kenngröße des jeweils den Messraum (22) durchströmenden Mediums überwacht und/oder erfasst und Mittel vorgesehen sind, welche kenngrößenabhängig eine selektive Kopplung oder Entkopplung zwischen Zähleranordnung und Rechenwerk (4) bewirken.

2. Volumenzähler (2) nach Anspruch 1, **dadurch gekennzeichnet, dass** eine Kopplung zwischen Zähleranordnung und Rechenwerk (4) dann bewirkt ist, wenn die mittels Sensoranordnung (36) erfasste Kenngröße einer Flüssigkeit, insbesondere Wasser, entspricht.

3. Volumenzähler (2) nach einem der Ansprüche 1 oder 2, **dadurch gekennzeichnet, dass** eine Entkopplung zwischen Zähleranordnung und Rechenwerk (4) dann bewirkt ist, wenn die mittels Sensoranordnung (36) erfasste Kenngröße einem Gas, insbesondere Luft, entspricht.

4. Volumenzähler (2) nach einem der vorherigen Ansprüche, **dadurch gekennzeichnet, dass** die Sensoranordnung (36) Mittel aufweist, um die elektrische Leitfähigkeit, den elektrischen Widerstand, die Kapazität, die Induktivität, die magnetische Suszeptibilität, die optische Dichte oder den Brechungsindex des den Messraum durchströmenden Mediums oder eine Kombination daraus zu erfassen und/oder zu bestimmen.

5. Volumenzähler (2) nach einem der vorherigen Ansprüche, **dadurch gekennzeichnet, dass** die Kopplung und/oder Entkopplung von Rechenwerk (4) und Zähleranordnung elektronisch gesteuert erfolgt.

6. Volumenzähler (2) nach einem der vorherigen Ansprüche, **dadurch gekennzeichnet, dass** die Sensoranordnung (36) wenigstens zwei elektrisch leitfähige Kontakte (36a,36b) aufweist, welche in den vom Medium durchströmten Bereichen des Volumenzählers (2), insbesondere im Messraum (20), voneinander beabstandet angeordnet sind und/oder zwischen jeweils zwei Kontakten (36a,36b) eine Spannungsdifferenz beaufschlagbar ist.

7. Volumenzähler (2) nach Anspruch 6, **dadurch gekennzeichnet, dass** Mittel vorgesehen sind, um die elektrische Leitfähigkeit und/oder den elektrischen Widerstand des zwischen den wenigstens zwei Kontakten (36a,36b) strömenden Mediums zu überwachen und/oder zu bestimmen.

8. Volumenzähler (2) nach Anspruch 7, **dadurch gekennzeichnet, dass** weiterhin Mittel vorgesehen sind, die bei Überschreiten eines vorbestimmbaren elektrischen Leitfähigkeitswertes das Rechenwerk (4) an die Zähleranordnung koppeln und/oder bei Unterschreiten eines vorbestimmbaren elektrischen Leitfähigkeitswertes Rechenwerk (4) und Zähleranordnung entkoppeln.

9. Verfahren zur Volumenzählung strömender Medien, insbesondere von Flüssigkeiten, mittels eines Volumenzählers gemäß einem der Ansprüche 1 bis 8, **dadurch gekennzeichnet, dass** wenigstens eine vorbestimmbare spezifische Kenngröße des jeweils den Messraum (22) durchströmenden Mediums mit einer im Messraum (22) vorgesehenen Sensoranordnung (36) überwacht und/oder erfasst wird und kenngrößenabhängig eine selektive Kopplung und/oder Entkopplung zwischen Zähleranordnung und Rechenwerk (4) bewirkt wird.

10. Verfahren nach Anspruch 9, **dadurch gekennzeichnet, dass** eine Kopplung zwischen Zähleranordnung und Rechenwerk (4) dann bewirkt ist, wenn die mittels Sensoranordnung (36) erfasste Kenngröße einer Flüssigkeit, insbesondere Wasser, entspricht oder dieser zugeordnet wird.

11. Verfahren nach einem der Ansprüche 9 oder 10, **dadurch gekennzeichnet, dass** eine Entkopplung zwischen Zähleranordnung und Rechenwerk (4) dann bewirkt wird, wenn die erfasste Kenngröße einem Gas, insbesondere Luft, entspricht oder diesem zugeordnet wird.

12. Verfahren nach einem der Ansprüche 9 bis 11, **dadurch gekennzeichnet, dass** die elektrische Leitfähigkeit, der elektrische Widerstand, die Kapazität, die Induktivität, die magnetische Suszeptibilität, die optische Dichte oder der Brechungsindex des strömenden Mediums oder eine Kombination daraus erfasst und/oder bestimmt wird.

13. Verfahren nach einem der Ansprüche 9 bis 12, **dadurch gekennzeichnet, dass** die Kopplung und/oder Entkopplung anhand wenigstens eines vorbestimmbaren Kenngrößen-Schwellenwertes bewirkt wird.

## Claims

1. Multi-jet volume meter (2) for flowing media, in particular for liquids, having a computation means (4), having a volume measurement device with a measurement area (22) through which a medium can flow and with inlets (10) and at least one outlet (12), and having a meter arrangement, **characterized in that** a sensor arrangement (36) is provided in the measurement area (22), which sensor arrangement monitors and/or detects at least one predeterminable specific characteristic variable of the medium in each case flowing through the measurement area, and means are provided, which cause the meter arrangement and the computation means (4) to be selectively coupled or decoupled as a function of the characteristic variable.

2. Volume meter (2) according to Claim 1, **characterized in that** the meter arrangement and the computation means (4) are coupled when the characteristic variable detected by means of the sensor arrangement (36) corresponds to a liquid, in particular water.

3. Volume meter (2) according to one of Claims 1 or 2, **characterized in that** the meter arrangement and the computation means (4) are decoupled when the characteristic variable detected by means of the sensor arrangement (36) corresponds to a gas, in particular air.

4. Volume meter (2) according to one of the preceding claims, **characterized in that** the sensor arrangement (36) has means in order to detect and/or to determine the electrical conductivity, the electrical resistance, the capacitance, the inductance, the magnetic susceptibility, the optical density or the refractive index of the medium flowing through the measurement area, or a combination thereof.

5. Volume meter (2) according to one of the preceding claims, **characterized in that** the computation means (4) and the meter arrangement are coupled and/or decoupled under electronic control.

6. Volume meter (2) according to one of the preceding claims, **characterized in that** the sensor arrangement (36) has at least two electrically conductive contacts (36a, 36b) which are arranged at a distance from one another in those areas of the volume meter (2) through which the medium flows, in particular in the measurement area (20), and/or a voltage difference can in each case be applied between two contacts (36a, 36b).

7. Volume meter (2) according to Claim 6, **characterized in that** means are provided in order to monitor and/or determine the electrical conductivity and/or the electrical resistance of the medium flowing between the at least two contacts (36a, 36b).

8. Volume meter (2) according to Claim 7, **characterized in that** means are also provided which couple the computation means (4) to the meter arrangement when a predeterminable electrical conductivity value is exceeded, and/or decouple the computation means (4) and the meter arrangement when a predeterminable electrical conductivity value is undershot.

9. Method for volume metering of flowing media, in particular of liquids, by means of a volume meter according to one of Claims 1 to 8, **characterized in that** at least one predeterminable specific characteristic variable of the medium in each case flowing through the measurement area (22) is monitored and/or detected using a sensor arrangement (36) provided in the measurement area (22), and the meter arrangement and computation means (4) are selectively coupled and/or decoupled as a function of the characteristic variable.

10. Method according to Claim 9, **characterized in that** the meter arrangement and the computation means (4) are coupled when the characteristic variable detected by means of the sensor arrangement (36) corresponds to or is associated with a liquid, in particular water.

11. Method according to one of Claims 9 or 10, **characterized in that** the meter arrangement and the computation means (4) are decoupled when the detected characteristic variable corresponds to or is associated with a gas, in particular air.

12. Method according to one of Claims 9 to 11, **characterized in that** the electrical conductivity, the electrical resistance, the capacitance, the inductance, the magnetic susceptibility, the optical density or the refractive index of the flowing medium, or a combination thereof, is detected and/or determined.

13. Method according to one of Claims 9 to 12, **characterized in that** the coupling and/or decoupling are/is carried out on the basis of at least one predeterminable characteristic variable threshold value.

## Revendications

1. Compteur volumétrique multifaisceaux (2) pour substances en écoulement, notamment pour liquides, comprenant une unité arithmétique (4), comprenant un dispositif de mesure de volume ayant un espace de mesure (22) pouvant être traversé par une substance et muni d'orifices d'entrée (10) ainsi que d'au moins un orifice de sortie (12), ainsi qu'un moyen de comptage, **caractérisé en ce qu'**il est prévu dans l'espace de mesure (22) un moyen à capteur (36) surveillant et/ou détectant au moins une caractéristique spécifique pouvant être prédéterminée de la substance respective s'écoulant à travers l'espace de mesure (22) et **en ce qu'**il est prévu des moyens qui effectuent un couplage ou un découplage sélectif entre le compteur et l'unité arithmétique (4) en fonction de la caractéristique.

2. Compteur volumétrique (2) selon la revendication 1, **caractérisé en ce qu'**un couplage entre le compteur et l'unité arithmétique (4) n'est effectué que lorsque la caractéristique détectée à l'aide du moyen à capteur (36) correspond à un liquide, notamment à de l'eau.

3. Compteur volumétrique (2) selon l'une quelconque des revendications 1 ou 2, **caractérisé en ce qu'**un découplage entre le compteur et l'unité arithmétique (4) n'est effectué que lorsque la caractéristique détectée à l'aide du moyen à capteur (36) correspond à un gaz, notamment à de l'air.

4. Compteur volumétrique (2) selon l'une quelconque des revendications précédentes, **caractérisé en ce que** le moyen à capteur (36) comprend des moyens destinés à détecter et/ou déterminer la conductivité électrique, la résistance électrique, la capacité, l'inductance, la susceptibilité magnétique, la densité optique, ou l'indice de réfraction de la substance s'écoulant à travers l'espace de mesure ou une combinaison de ceux-ci.

5. Compteur volumétrique (2) selon l'une quelconque des revendications précédentes, **caractérisé en ce que** le couplage et/ou le découplage s'effectue de manière commandée électroniquement par l'unité arithmétique (4) et le compteur.

6. Compteur volumétrique (2) selon l'une quelconque des revendications précédentes, **caractérisé en ce que** le moyen à capteur (36) comprend au moins deux contacts électriquement conducteurs (36a, 36b) qui sont disposés de manière espacée l'un de l'autre dans la région du compteur volumétrique (2) qui est traversée par la substance, notamment dans l'espace de mesure (20), et/ou **en ce qu'**une différence de potentiel peut être appliquée entre les deux contacts respectifs (36a, 36b).

7. Compteur volumétrique (2) selon la revendication 6, **caractérisé en ce qu'**il est prévu des moyens destinés à surveiller et/ou à déterminer la conductivité électrique et/ou la résistance électrique de la substance s'écoulant entre les au moins deux contacts (36a, 36b).

8. Compteur volumétrique (2) selon la revendication 7, **caractérisé en ce qu'**il est en outre prévu des moyens qui couplent l'unité arithmétique (4) au compteur lors du dépassement d'une valeur pouvant être prédéterminée de la conductivité électrique et/ou qui découplent l'unité arithmétique (4) du compteur lorsqu'une valeur pouvant être prédéterminée de la conductivité électrique n'est pas atteinte.

9. Procédé de comptage de volume de substances en écoulement, notamment de liquides, au moyen d'un compteur volumétrique selon l'une quelconque des revendications 1 à 8, **caractérisé en ce qu'**au moins une caractéristique spécifique pouvant être prédéterminée de la substance respective s'écoulant à travers l'espace de mesure (22) est surveillée et/ou détectée à l'aide d'un moyen à capteur (36) prévu dans l'espace de mesure (22) et **en ce qu'**un couplage et/ou un découplage sélectif est effectué en fonction d'une caractéristique entre le compteur et l'unité arithmétique (4).

10. Procédé selon la revendication 9, **caractérisé en ce qu'**un couplage entre le compteur et l'unité arithmétique (4) n'est effectué que lorsque la caractéristique détectée à l'aide du moyen à capteur (36) correspond à un liquide, notamment à de l'eau, ou y est associée.

11. Procédé selon l'une quelconque des revendications 9 ou 10, **caractérisé en ce qu'**un découplage entre le compteur et l'unité arithmétique (4) n'est effectué que lorsque la caractéristique détectée correspond à un gaz, notamment à de l'air, ou y est associée.

12. Procédé selon l'une quelconque des revendications 9 à 11, **caractérisé en ce que** la conductivité électrique, la résistance électrique, la capacité, l'inductance, la susceptibilité magnétique, la densité optique, ou l'indice de réfraction de la substance en écoulement ou une combinaison de ceux-ci est détectée et/ou déterminée.

13. Procédé selon l'une quelconque des revendications 9 à 12, **caractérisé en ce que** le couplage et/ou le découplage est effectué sur la base d'au moins une valeur de seuil prédéterminée de la caractéristique.
